# EUROPÄISCHE PATENTSCHRIFT

(11) **EP 2 599 387 B1**
(45) Veröffentlichungstag und Bekanntmachung des Hinweises auf die Patenterteilung: **01.05.2019**
(21) Anmeldenummer: 11191797.7
(22) Anmeldetag: 02.12.2011
(51) Int. Cl.: A22B 5/00

(54) **Messvorrichtung zum individuellen Erfassen von Körpermerkmalen von in Reihe förderbaren geschlachteten Tierkörpern und wenigstens eine solche Messvorrichtung umfassende Bearbeitungsvorrichtung**
Measurement device for individual identification of physical features of butchered animals conveyed in a row and processing equipment including at least one such measurement equipment
Dispositif de mesure pour l'établissement individuel de caractéristiques corporelles de corps de bétail abattus et transportables en rangée et dispositif de traitement comprenant au moins un tel dispositif de mesure

(43) Veröffentlichungstag der Anmeldung: 05.06.2013
(73) Patentinhaber: Nordischer Maschinenbau Rud. Baader GmbH + Co. KG, 23560 Lübeck (DE)
(72) Erfinder: Gütte, Ulrich, 23843 Bad Oldesloe (DE)
(74) Vertreter: Stork Bamberger Patentanwälte PartmbB

(56) Entgegenhaltungen:
- WO-A1-01/09587
- DE-A1- 3 915 513
- US-B1- 6 277 019

## Beschreibung

Die Erfindung betrifft eine Tierkörper-Messvorrichtung, eingerichtet zum individuellen Erfassen von Merkmalen von in Reihe beabstandet und längs eines Weges förderbaren geschlachteten Tierkörpern, insbesondere nämlich von zu filetierenden Geflügelkörpern, umfassend wenigstens einen Messgeber, eingerichtet zum Messen wenigstens eines Merkmals der Tierkörper, einen Mess-Durchgangsraum zum Durchfördern der Tierkörper längs eines Mess-Durchgangswegs, an dem wenigstens ein genannter Messgeber zum Messen während des Förderns angeordnet ist, sowie ein Haltemittel, das den genannten Messgeber in innerhalb des Mess-Durchgangsraums liegender Position hält. Das Haltemittel umfasst ein Bewegungsmittel, mit dem der genannte Messgeber durch Hinundherbewegen verstellbar ist zwischen innerhalb des Mess-Durchgangsraums liegender Messposition und einer freien Durchgang der Tierkörper zulassenden Außenposition, die als solche vollständig außerhalb des Mess-Durchgangsraums liegt. Die Erfindung bezieht sich auch auf eine Bearbeitungsvorrichtung, die mit mindestens einer genannten Messvorrichtung ausgestattet ist.

Die bezeichnete Messvorrichtung ist üblicherweise Bestandteil einer Bearbeitungsvorrichtung zur Bearbeitung von geschlachteten Tierkörpern, wobei unter Tierkörpern auch Tierkörperteile verstanden werden.

WO 01/09587 A1 offenbart eine gattungsgemäße Messvorrichtung, die längs einer Bearbeitungslinie Bearbeitungswerkzeugen zum Entweiden eines Fisches nachgeordnet ist. Die Messvorrichtung weist einen Licht-Messkopf auf, der zwischen einer Außenposition und einer Messposition hin- und herbewegbar ist. In der Messposition liegt der Licht-Messkopf an dem Bauchfell der Bauchinnenseite eines entweideten Fisches an, um dort Lichtreflexion zu messen.

Die Bearbeitungsvorrichtung ist insbesondere zur Geflügelbe- bzw. -verarbeitung, nämlich zum Filetieren von Brustkappen oder Vorderhälften eingerichtet. Die Vorrichtung, insbesondere zum Entfernen des Fleisches von ausgenommenen Körpern geschlachteten extremitätenlosen Geflügels, umfasst in einer Bearbeitungslinie angeordnet Bearbeitungswerkzeuge, einen angetriebenen Förderer mit daran längs der Bearbeitungslinie in Reihe angeordneten Haltevorrichtungen zum Transport von dort gestützten Tierkörpern, insbesondere aufgesattelten Geflügelkörpern, sowie zum Vorbeiführen derselben an den Bearbeitungswerkzeugen, wenigstens eine Messsignale abgebende Messvorrichtung zum Erfassen individueller Körpermerkmale der Tierkörper sowie eine die Messsignale empfangende Steuereinrichtung zum Steuern des Betriebs der Bearbeitungswerkzeuge.

Eine gattungsgemäße Bearbeitungsvorrichtung mit Messvorrichtungen ist zum Beispiel aus DE 198 48 498 A1 bekannt und dort beschrieben. Die Haltevorrichtungen sind längs der Bearbeitungslinie an dem Förderer angeordnet, der üblicherweise mit Obertrum und Untertrum umlaufend ausgebildet ist. Die Haltevorrichtung wird zumeist in Form eines sattelartigen Stützkörpers vorgesehen, wie dieser bekannt ist und zum Beispiel in DE 39 18 345 A1 beschrieben wird. Die Messvorrichtung bildet in der Bearbeitungsvorrichtung eine Messstation. Der Messgeber erfasst spezifische Daten, die individuelle Merkmale des zu bearbeitenden Tierkörpers betreffen. Zum Beispiel werden Größe, Geometrie und/oder Lage im Raum ermittelt. Besonders eignen sich die Körpergelenke eines Geflügelkörpers, nämlich die beiden Schulter-Gelenkpunkte, als Messpunkte, die in Transportrichtung des Förderers nach vorn gerichtet sind und durch zugeordnete Messgeber, die durch insbesondere unter Rückstellkraft auslenkbare Messelemente, z. B. Messfahnen, gebildet sind, detektiert werden. Insbesondere wird auch eine Messvorrichtung vorgesehen, die die Dicke, also ein Quermaß des zu bearbeitenden Tierkörpers misst und mit insbesondere unter Rückstellkraft auslenkbaren Messelementen, zum Beispiel in Form eines Paares klappenartiger Schwenkelemente, arbeitet.

Die bekannten Messvorrichtungen, die mit den schwenkbaren Messgebern ausgestattet sind, können nur in Reihe geförderte Geflügelkörper erfassen, die während des Transports bzw. der Förderung ausreichend beabstandet sind. Der Durchsatz ist aufgrund einzuhaltender Mindestabstände eingeschränkt. Die schwenkbaren Messgeber kommen von der Haltevorrichtung bzw. dem darauf gestützten Tierkörper erst nach deren Durchgang durch die Messvorrichtung frei und benötigen zwischen den Haltevorrichtungen Zeit und Raum, um zum Start für eine folgende Messung in eine definierte Ausgangsposition, nämlich eine Normalposition zu gelangen.

Demgegenüber liegen der Erfindung die Ziele zugrunde, eine Messvorrichtung mit wenigstens einem beim Messen schwenkbaren Messgeber zu schaffen, die sich zum individuellen Messen in Reihe geförderter Tierkörper wesentlich schneller betreiben lässt. Auch soll gegebenenfalls der Messbetrieb hinsichtlich einer Schonung des Messgebers bzw. der Messgeber beim Messen verbessert sein.

Die Ziele werden in Verbindung mit den Merkmalen der eingangs genannten Messvorrichtung durch die kennzeichnenden Merkmale des Anspruchs 1 erreicht. Eine eingangs genannte Bearbeitungsvorrichtung weist wenigstens eine genannte erfindungsgemäße Messvorrichtung auf. Dadurch wird insbesondere der Durchsatz gesteigert, und Maßnahmen und Möglichkeiten für eine Durchsatzsteigerung sind verbessert.

Mit der Erfindung werden gezielt einerseits die Messposition und andererseits die Außenposition des Messgebers herbeigeführt. In der Außenposition ist eine Querschnitts-überlappung des Messgebers mit im Mess-Durchgangsraum zu messendem Tierkörper ausgeschlossen. In der Messposition befindet sich der Messgeber innerhalb des Mess-Durchgangsraums bzw. des zugehörigen Durchgangswegs, und zwar in einem Durchgangsquerschnitt, der von zu messenden Tierkörpern passiert wird. In der Messposition erfolgt die Messung am Tierkörper derart, dass mittels des Messgebers an bestimmter Stelle oder auch in bestimmtem Bereich des Tierkörpers ein insbesondere Position, Dimension oder auch Beschaffenheit erfassender repräsentativer Messwert gewonnen wird. Der Messgeber kann durch jedes geeignete Messelement gebildet sein, das mit Berührungskontakt oder mit berührungslosem, insbesondere optischem oder sonstwie durch Messwellen bzw. -strahlen bewirktem Kontakt arbeitet. Erfindungsgemäß befindet sich der Messgeber in seiner Außenposition, in der im Vergleich mit eingesteuerter Messposition aufgesteuert ist, vollständig außerhalb des Mess-Durchgangsraums. Er kommt damit in der Aufsteuer-/Außenposition vollständig frei von Querschnittsüberlappung mit dem zu messenden Tierkörper, also außerhalb des Querschnitts, in dem der zu messende Tierkörper den Durchgangsraum passiert, zu liegen. Die Außenposition ermöglicht, dass der Messgeber ohne Beeinflussung durch den zu messenden, durch den Messdurchgang hindurchgehenden Tierkörper in eine Position, insbesondere eine Ausgangs- oder Normalposition setzbar ist, die den Messstart zur nächsten Messung definiert oder vorbereitet. Dieser Messstart kann infolgedessen weitgehend unabhängig, das heißt ohne Einschränkung, von dem zeitlichen Abstand der Beförderung aufeinanderfolgend zu messender Tierkörper vorgesehen und eingestellt werden. Zudem erreicht man gegebenenfalls eine verbesserte Nutzung von Rechenzeit einer das Messergebnis verarbeitenden Steuer-/Auswerteeinrichtung. Auch ist erreicht, dass sich der Messgeber, während der Tierkörper passiert, nicht ständig in einer der Messposition entsprechenden Korrespondenzstellung befindet, sondern in messfreier Zeit zumindest weitgehend in der Außenposition gehalten ist. Aus diesen Maßnahmen resultiert auch eine Schonung der zu messenden Tierkörper beim Durchgang durch den Messdurchgang der Messvorrichtung. In einer erfindungsgemäßen Bearbeitungsvorrichtung, in der wenigstens eine erfindungsgemäße Messvorrichtung angeordnet ist, lässt sich der Durchsatz weitgehend unabhängig von den Abläufen zur Messung beträchtlich steigern.

Erfindungsgemäß umfasst das Haltemittel des Messgebers ein Bewegungsmittel, dass den Messgeber derart hin und her bewegt, dass er wechselweise die Messposition bzw. die Außenposition einnimmt. Vielfältige Gestaltungen eines solchen Bewegungsmittels sind möglich. Die Verstellbewegung des Bewegungsmittels kann vorteilhaft durch eine Schwenkeinrichtung verwirklicht sein, in der der Messgeber um eine insbesondere sich in Richtung des Mess-Durchgangswegs erstreckende Schwenkachse hin und her schwenkbar ist. Zweckmäßig kann der Messgeber über ein hebel- oder armartiges, zum Beispiel kolben- oder kurbelartiges Element schwenkbewegbar angelenkt sein, das mit gesteuertem Antrieb, vorteilhaft pneumatisch, betrieben wird.

Als besonders vorteilhaft hat es sich erwiesen, den um eine Aufsteuer-Schwenkachse schwenkbaren Messgeber und ein vorrichtungsstationäres Halteelement mit einem durch Steuerung längenveränderbaren Steuerelement zu verbinden, um nach Maßgabe der Längenveränderung die Schwenkbewegung des Messgebers zum Aufsteuern und Einsteuern zu bewirken. Das längenveränderbare Steuerelement ist vorteilhaft ein steuerbarer Pneumatikzylinder. Eine bevorzugte Ausgestaltung besteht darin, dass das längenveränderbare Steuerelement und das stationäre Halteelement um eine gemeinsame Achse, nämlich um eine Messschwenkachse, schwenkbar gehalten sind, um zur Messung am Tierkörper eine Messschwenkbewegung auszuführen.

Das Bewegungsmittel kann auch eine Kurvenführung zum Steuern der Verstellbewegung des Messgebers zwischen Messposition und Außenposition umfassen. Die Kurvenführung kann zum Beispiel eine Kulissenführung für einen Steuerweg sein. Der Antrieb kann durch aktive Elemente, z. B. durch eine Pneumatik oder durch passive Mittel, insbesondere durch Hebel oder Stangenführungen erfolgen, die vorzugsweise an Antriebs-, Förder- und/oder Steuerelemente einer Bearbeitungsvorrichtung angeschlossen und damit betrieben bzw. gesteuert werden können.

Es kann ein berührungslos arbeitender, zum Beispiel lichtoptischer Messgeber vorgesehen werden, der in seiner Messposition einen Messwert an zugeordneter Stelle und ausgelegt für die zu messende Größe frei von Berührung mit dem Tierkörper aufnimmt.

Eine besonders vorteilhafte Gestaltung besteht darin, dass das Bewegungsmittel ein eine zeitliche Abfolge bewirkendes Steuermittel umfasst, das derart eingerichtet ist, dass es den Messgeber zunächst in seine Messposition und nach Abschluss der Messung noch während des Passierens des gemessenen Tierkörpers in seine Außenposition steuert. Das Steuermittel kann eine computergesteuerte und/oder mechanische Steuerung umfassen.

Zu der Außenposition gehört die den Start jeder Messung definierende Normalposition. Eine solche Ausgangsposition lässt sich dann je nach Zeiterfordernis insbesondere zeitlich unmittelbar nach Durchführung der Messung und jedenfalls bereits dann herstellen, wenn der zu messende Tierkörper den Messgeber im zu durchquerenden Mess-Durchgang noch nicht vollständig, insbesondere auch nur zu einem geringen Teil passiert hat. Dies ist für die Gestaltungen von Bedeutung, bei denen der Messgeber an dem Mess-Durchgangsweg so angeordnet und gestaltet ist, dass er mit dem zu messenden Tierkörper in Berührungskontakt gelangt und aus dieser Position wieder heraus zu bewegen ist. Wenigstens ein genannter Messgeber ist in an sich bekannter Weise derart ausgebildet, dass er in seiner Messposition schwenkbeweglich, insbesondere gegen Rückstellkraft, an jedem zu messenden Tierkörper zur Anlage gelangt, wobei er ein Messergebnis nach Maßgabe von Mess-Schwenkauslenkung aus der Normalposition heraus bewirkt und in der Außenposition durch Wirken einer Rückstellkraft in die Normalposition gelangt. In einem solchen Fall umfasst die Außenposition eine definierte Normalposition zwischen zwei aufeinanderfolgenden Messungen. Eine den Messstart definierende Normalposition kann aber auch in anderen Fällen in der Außenposition des Messgebers eingestellt werden, also allgemein in Fällen, in denen der Messgeber mit seiner in der Außenposition eingestellten Position, insoweit diese beibehaltend, in die Messposition gebracht wird, um durch Start in letzterer Position die Messung durchzuführen.
Ein Messgeber, der, insbesondere gegen Rückstellkraft, in seiner Messposition, schwenkbeweglich an jeden zu messenden Tierkörper zur Anlage gelangt, ist vorteilhaft als an sich bekannte Messfahne oder ein sonstiges steifes Schwenkelement ausgebildet, das beim Auftreffen auf eine zu messende Stelle des Geflügelkörpers zum Erzeugen eines Messwertes durch Drehbewegung ausweicht.

Eine erfindungsgemäße Messvorrichtung wird mit einem auslenkbaren Messgeber zum Erfassen der Position wenigstens einer in der Bearbeitungslinie einer Bearbeitungsvorrichtung vorausgerichteten Körperstelle von geförderten Tierkörpern eingerichtet und angeordnet. In diesem Fall und allgemein in einer erfindungsgemäßen Bearbeitungsvorrichtung steht das während der Förderung gewonnene Messsignal einer Steuereinrichtung der Bearbeitungsvorrichtung zum Steuern des Betriebs von Bearbeitungswerkzeugen, insbesondere Trennwerkzeugen zur Verfügung. Insbesondere werden üblicherweise Messgeber, die durch Messfahnen od. dgl. gebildet sind, paarweise angeordnet, um die Schulter-Körpergelenke von zu messenden bzw. zu bearbeitenden Geflügelkörpern zu erkennen bzw. zu erfassen. Solche Messgeber sind entsprechend dem Abstand der Körpergelenke spurversetzt montiert.
Eine erfindungsgemäße Messvorrichtung kann auch zum Erfassen einer Querabmessung, insbesondere der maximalen Dicke jedes Tierkörpers eingerichtet sein. Eine solche Messvorrichtung umfasst zum Beispiel in an sich bekannter Weise zwei Messgeber oder Messelemente, die in einer Ebene angeordnet sind und nach Art einer zweiflügeligen Schwenktür einen Messdurchgang bzw. einen zur Körpermessung, insbesondere gegen Rückstellkraft, öffnungsfähigen Durchgang bilden. Auch eine solche Messvorrichtung liefert Steuersignale für die Steuereinrichtung der Bearbeitungsvorrichtung, um eine oder mehrere Bearbeitungs-/Trennvorrichtungen oder anderer Organe oder Aggregate längs der Bearbeitungslinie zu steuern.

Ein besonderer Vorteil einer erfindungsgemäßen Bearbeitungsvorrichtung besteht darin, dass das Bewegungsmittel der Messeinrichtung ein Steuer- bzw. Einstellmittel umfassen kann, mit dem die Zeit, in der sich der Messgeber in seiner Außenposition befindet, nach Maßgabe eines gewünschten zeitlichen Abstands zwischen zwei bei Förderung aufeinanderfolgenden Haltevorrichtungen eingestellt ist. Je nachdem, welcher zeitliche Abstand zwischen aufeinanderfolgenden Haltevorrichtungen gewünscht ist, können Ablauf bzw. Geschwindigkeit des Wechsels der Verstellbewegung des Messgebers zwischen seiner Messposition und seiner Außenposition eingestellt werden. Diese Einstellung wird durch die Förderlänge der Haltevorrichtungen, die zumeist gleich sind und auch gleich beabstandet sind, nicht beeinträchtig oder behindert, also insbesondere nicht durch Zeit, die zur Messung benötigt wird, zum Beispiel durch Ausführen eines Computer-Steuerprogramms der Messvorrichtung und/oder einer Steuereinrichtung der Bearbeitungsvorrichtung zur Messwertverarbeitung und/oder Auswertung.

Ein besonderer Vorteil einer erfindungsgemäßen Bearbeitungsvorrichtung besteht darin, dass der Durchsatz auch bei relativ kleiner oder bei durch Konstruktions- und/oder Betriebsparameter der Bearbeitungsvorrichtung begrenzter Fördergeschwindigkeit dennoch gesteigert werden kann. So kann das Steuermittel der Messeinrichtung so eingerichtet und eingestellt sein, dass kurzer Zeit zwischen zwei aufeinanderfolgenden Haltevorrichtungen zur Messung entsprochen werden kann. Diese können bei konstanter Fördergeschwindigkeit in gleichem räumlichem Abstand angeordnet sein und damit in einem durch Reduzieren des räumlichen Abstands entsprechend verringerten zeitlichen Abstand, wobei die Zeit zwischen zwei Ausgangs-/Normalpositionen erfindungsgemäß sogar in der Größenordnung oder kleiner als der zeitliche Folgeabstand der Haltevorrichtungen gewählt werden kann. Der (gleiche) Abstand der Haltevorrichtungen kann auf ein weitgehend kleines Maß reduziert werden, das den Durchsatz der Bearbeitungsvorrichtung bzw. der damit betriebenen Anlage bestimmt und damit wesentlich erhöht.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als unabhängiges Detailbeispiel für andere nicht oder nicht vollständig beschriebene, unter die Erfindung fallende Ausführungen oder Gestaltungen zu versehen.

Es zeigen
- Fig. 1: in Draufsicht einen Abschnitt des Untertrums einer mit erfindungsgemäßer Messvorrichtung ausgestatteten erfindungsgemäßen Bearbeitungsvorrichtung,
- Fig. 2A und 2B: in Seitenansicht und Draufsicht Teile einer erfindungsgemäßen Messvorrichtung, die an einer mittels Haltevorrichtungen Tierkörper fördernden Förderstrecke angeordnet ist,
- Fig. 3A und 3B: in Stirnansicht und Seitenansicht die Messvorrichtung der Fig. 2 in aufgesteuertem Zustand und
- Fig. 4A und 4B: in Stirnansicht und Seitenansicht die Messvorrichtung der Fig. 2 in eingesteuertem Zustand.

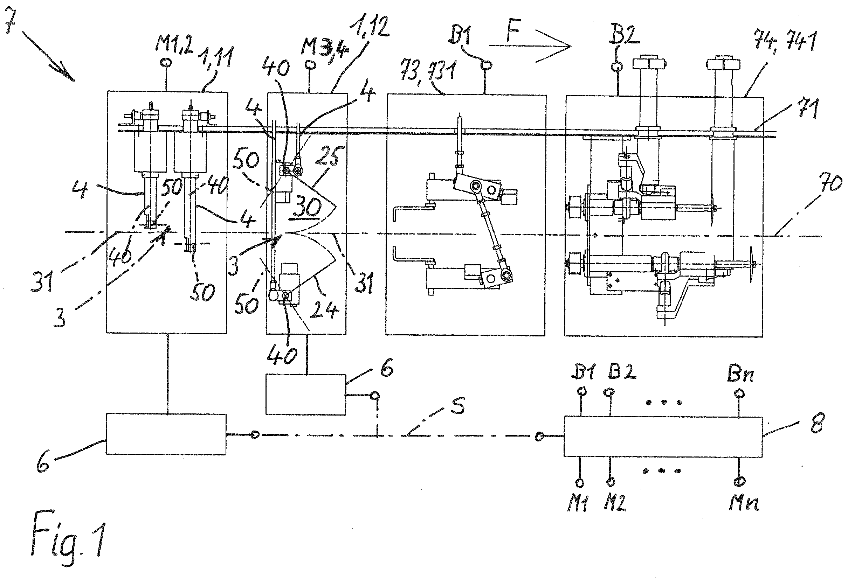

In Fig. 1 ist ein Abschnitt einer an sich bekannten Bearbeitungsvorrichtung 7 dargestellt. Im Beispiel handelt es sich um eine Geflügelbe- und Verarbeitungsvorrichtung zum Abtrennen der Filets von ausgenommenen Körpern extremitätenlosen Geflügels. Eine solche Bearbeitungsvorrichtung umfasst eine Mehrzahl von Stationen, die längs einer Obertrum und Untertrum aufweisenden, zu einer Bearbeitungslinie 70 gehörenden Förderstrecke angeordnet sind. Organe, nämlich insbesondere Bearbeitungswerkzeuge der Stationen, werden mittels einer computergestützten Steuereinrichtung 8 betrieben, die die Stationen beaufschlagende Steuersignale B1,..., Bn insbesondere nach Maßgabe von Mess-/Steuersignalen M1 ... Mn hervorbringt.

Fig. 1 zeigt lediglich zwei am Untertrum angeordnete Bearbeitungsstationen 73, 74, nämlich eine erste Schabevorrichtung 731 und eine dieser in Förderrichtung F nachgeordnete zweite Schabeeinrichtung 741, mit zugehörigen Bearbeitungswerkzeugen.

Der dargestellte Untertrum-Abschnitt ist zudem mit zwei Messvorrichtungen 1; 11, 12 ausgestattet, die den Bearbeitungsstationen 73, 74 in der Bearbeitungslinie 70 vorgeordnet sind. Wie noch näher beschrieben wird, sind die Messvorrichtungen 1 erfindungsgemäß gestaltet. In der erfindungsgemäßen Bearbeitungsvorrichtung 7 gemäß Ausführungsbeispiel der Fig. 1 ist der Bearbeitungsstation 73 die Messvorrichtung 11 zugeordnet, während die Messvorrichtung 12 der Bearbeitungsstation 74 zugeordnet ist. Die Messvorrichtung 12 ist zwischen der Messvorrichtung 11 und der Bearbeitungsstation 73 angeordnet.

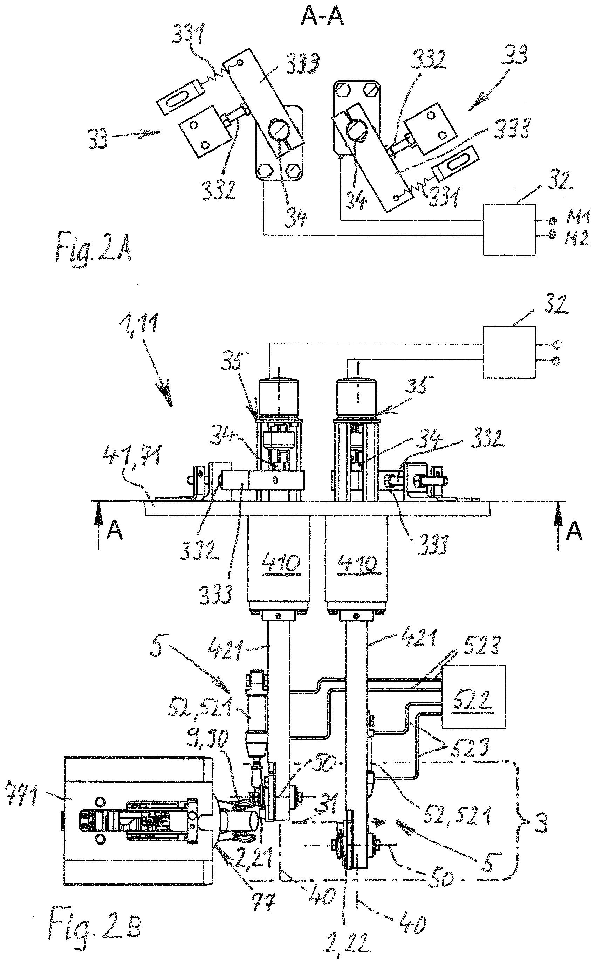

Die Bearbeitungsvorrichtung 7 umfasst ein Gestell oder Gehäuse 71, an dem die Bearbeitungswerkzeuge der einzelnen Stationen angeordnet und befestigt sind. Eine nicht dargestellte Fördereinrichtung weist einen endlos umlaufenden Förderer auf, der den Obertrum und den Untertrum bildet. An dem Förderer sind in gleichen Abständen an sich bekannte Haltevorrichtungen 77 befestigt. Teile der Haltevorrichtung 77 sind aus Fig. 2B bis 4B ersichtlich. Sie umfasst einen einen Sattel bildenden Stützkörper 772 und eine diesen tragende, an dem Förderer befestigte Sockelplatte 771 sowie eine nicht dargestellte Klemmeinrichtung. Am Untertrum befindet sich die Haltevorrichtung 77 in Position mit nach unten weisendem Stützkörper 772.

Teile des Geflügelkörpers 90 sind die Brustbeinplatte 91, das Brustbein 92, die Rabenbeine 93 und das Gabelbein 94. Körpergelenke 96, an denen auch Schulterblätter 95 sitzen, verbinden das Gabelbein 94 mit den Rabenbeinen 93.

Der Geflügelkörper 90 sitzt auf der Haltevorrichtung 77 auf, wobei die Brustbeinplatte 91 an der Sattelstützfläche des Stützkörpers 772 zu liegen kommt, und er wird mittels der Klemmeinrichtung gesichert, die einen gegen die Brustbeinplatte 91 bzw. die Stützfläche des Stützkörpers 772 arbeitenden Klemmhebel umfasst. Ein nicht dargestellter geeigneter Klemm-/Steuermechanismus, der ein an der Sockelplatte 771 hervorstehendes Auslöseelement 774 umfasst, öffnet bzw. schließt die Klemmeinrichtung zum Beschicken sowie zur Abgabe. Zugehörige Konstruktionen und Mechanismen, die sehr vielfältig sein können, sind üblich und bekannt.

Im Folgenden wird die Messvorrichtung 11 anhand der Fig. 2A bis 4B näher beschrieben.

Die Messvorrichtung 11 ist eingerichtet, um Körpergelenke 96 eines passierenden Tierkörpers 9, nämlich eines Geflügelkörpers 90 zu detektieren. Die Messung erfolgt, um insbesondere die Positionen der Körpergelenke 96 eines jeden einzelnen Geflügelkörpers 90 zu erfassen. Auch Aussagen über die Körpermaße können gewonnen werden.

Wie aus Fig. 2A bis 4B hervorgeht, umfasst die Messvorrichtung 11 gemäß Ausführungsbeispiel zwei Messgeber 2, nämlich ein erstes Messschwenkelement 21 und ein zweites Messschwenkelement 22. Ein Bestandteil der Messvorrichtung 11 bildendes Haltemittel 4 trägt die beiden Messschwenkelemente 21, 22. Das Haltemittel 4 umfasst mehrere Teile, nämlich eine Konsole oder einen Lagerkörper 41, daran gelagerte Halteelemente 42, nämlich Haltearme 421, ein jeweils an zugehörigem Halteelement 421 befestigtes Lagerelement 43, nämlich eine Lagerplatte 431 sowie, jeweils zwischen dem Messschwenkelement 21, 22 und dem Lagerelement 43, ein Bewegungsmittel 5. Der Lagerkörper 41 kann zum Beispiel eine Konsole oder Haltebasis sein, die insbesondere durch ein Gestell, ein Gehäuse und ein Lagerteil 410 der Messvorrichtung 11 gebildet ist. Zum Beispiel kann ein Teil einer Gehäusewand der Bearbeitungsvorrichtung 7 den Lagerkörper 41 bilden, wie dies aus Fig. 1 hervorgeht.

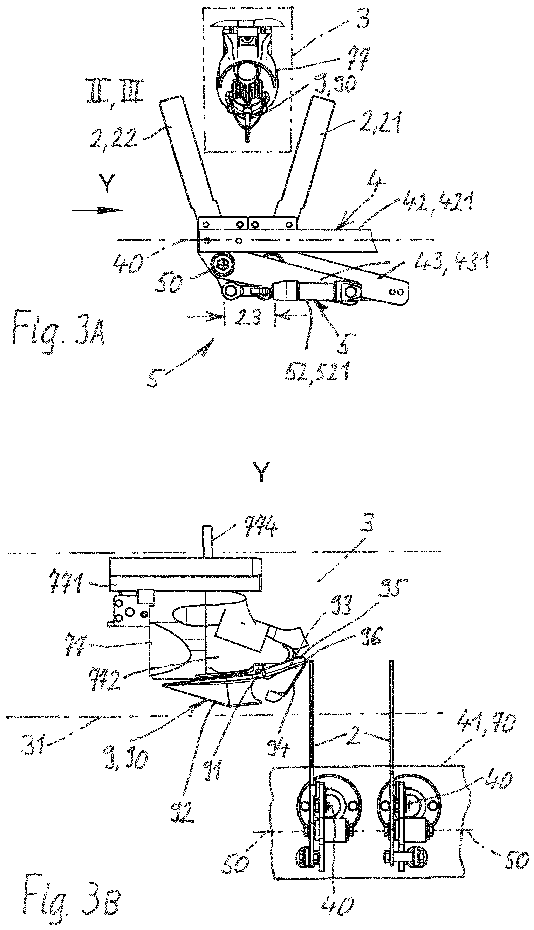

Wie in Fig. 3A bis 4B mit strichpunktierten Linien dargestellt, umfasst die Messvorrichtung 11 einen Durchgangsraum 3 sowie einen Durchgangsweg 31. Der Durchgangsweg 31 ist der Weg, den das Messobjekt, nämlich der Tierkörper 9 bzw. der Geflügelkörper 90 zurücklegen muss, um den wenigstens einen Messgeber 2 bzw. die Messschwenkelemente 21, 22, die an dem Durchgangsweg 31 angeordnet sind, zu passieren. Entsprechend ist der Durchgangsraum 3 der Raum, in den der wenigstens eine Messgeber 2 bzw. die Messschwenkelemente 21, 22 zum Messen räumlich und körperlich einfassen und der zum Durchqueren des Tierkörpers 9 bzw. des Geflügelkörpers 90 vorgesehen und eingerichtet ist.

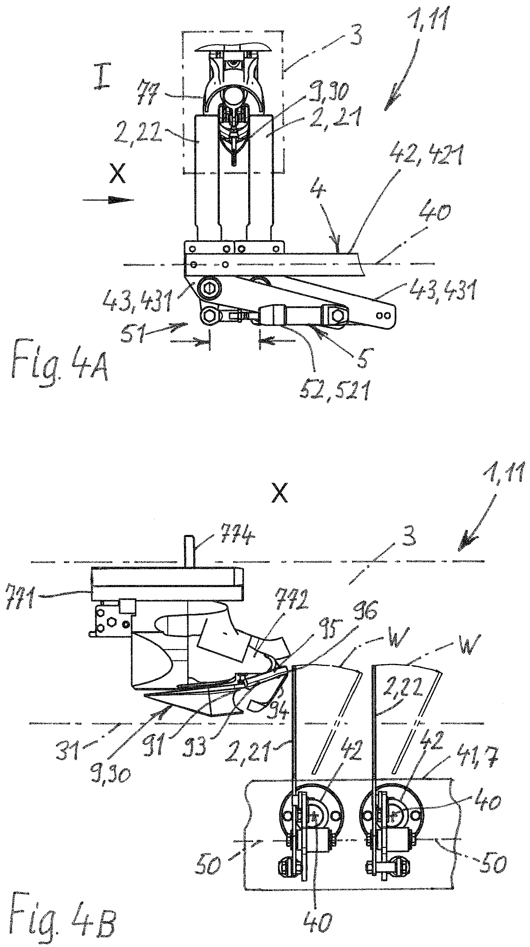

Im Ausführungsbeispiel sind die Messschwenkelemente 21, 22 in einem Abstand 23 quer zum Mess-Durchgangsweg 31 angeordnet, der dem Abstand der Körpergelenke 96 der Geflügelkörper 90 entspricht. Der Querabstand 23 ist so eingerichtet ist, dass die Körpergelenke 96 sämtlicher zu messender Geflügelkörper 90 zum Messen durch Berührungskontakt erfasst werden. Zu diesem Zweck sind, wie an sich bekannt, die Messschwenkelemente 21, 22 durch steife Messfahnen gebildet, die quer zum Mess-Durchgangsweg 31 eine ausreichende Breite aufweisen derart, dass sie zum Messen in den Weg jedes Körpergelenks 96 ragen. Diese Anordnung ist in Fig. 4A und 4B dargestellt. Jedes Messschwenkelement 21, 22 ist an dem zugehörigen Halteelement 42 drehfest befestigt, das um eine Messschwenkachse 40 schwenkbar an dem Lagerkörper 41 gelagert ist. Jedes Messschwenkelement 21, 22 ist so lang bemessen, dass es mit einem freien Ende der Bahn der Körpergelenke 96 zugeordnet ist. Die Messschwenkelemente 21, 22 sind in Bewegungs-Förderrichtung F des Messobjekts bzw. längs des Messwegs 31 versetzt angeordnet. Sie können auch nebeneinander an gleicher Wegstelle liegen.

Die Messanordnung und -funktion der Messschwenkelemente 21, 22 sind an sich bekannt. In Fig. 4B befindet sich das rechte Körpergelenk 96 unmittelbar vor der Messberührung mit dem Messschwenkelement 21, das zum Messen des Körpergelenks 96 um einen Messwinkel W von zum Beispiel ca. 25° geschwenkt wird, und zwar durch Drehverstellung des Halteelements 42 um die Messschwenkachse 40. Dieser Messwinkel W, der auch wesentlich kleiner als 25° sein kann, wird mit einem Messmittel 32 erfasst und in ein entsprechendes Messsignal M1 umgesetzt. Gleichermaßen wird zum Hervorbringen eines Messsignals M2 das andere linke Körpergelenk 96 mit dem zweiten Messschwenkelement 22 gemessen, das längs des Durchgangswegs 31 dem ersten Messschwenkelement 21 in räumlichem Abstand nachgeordnet ist. Aus M1 und M2 kann auch ein resultierendes gemeinsames Messsignal gebildet werden.

Die in Fig. 1, 2A, 2B, 4A und 4B dargestellten Positionen der Messschwenkelemente 21, 22 gehören zu Messpositionen I der Messschwenkelemente 21, 22. Die Messposition I wird allgemein als Position definiert, in der der Messgeber 2 vor seinem Messkontakt und während seines Messkontakts mit der zu messenden Tierkörperstelle im Mess-Durchgangsraum 3 bzw. im Mess-Durchgangsweg 31 mit Teilen des zu messenden Tierkörpers 9 räumlich überlappt.

In Fig. 3A und 3B ist die Messvorrichtung 1 mit Positionen der Messschwenkelemente 21, 22 dargestellt, die einen freien Durchgang der Geflügelkörper 90 sicherstellen. Die dargestellten Positionen der Messschwenkelemente 21, 22 gehören zu Außenpositionen II. In jeder Außenposition befindet sich der Messgeber 2 vollständig außerhalb des Mess-Durchgangsraums 3.

Das jeweils mit zugehörigem Lagerelement 43 und dem Messschwenkelement 21 bzw. 22 verbundene Bewegungsmittel 5 ist im Ausführungsbeispiel ein längenveränderbares Steuerelement 52, nämlich ein Pneumatikzylinder 521, das einen Bestandteil einer Schwenkeinrichtung 51 bildet und das Messschwenkelement 21, 22 um eine Aufsteuer-Schwenkachse 50 schwenkbeweglich anlenkt. Die Schwenkachse 50 erstreckt sich in Richtung des Mess-Durchgangswegs 31. Wie insbesondere im Vergleich der Fig. 3A, 3B und Fig. 4A, 4B deutlich wird, erzielt man mit dem Bewegungsmittel 5 ein Hin- und Herbewegen des zugehörigen Messschwenkelements 21 bzw. 22 zwischen der Messposition I und der Außenposition II.

Die Frequenz bzw. die Abfolge der Hin- und Herbewegung des wenigstens einen Messgebers 2 bzw. im Ausführungsbeispiel der Messschwenkelemente 21, 22 kann je nach Bedarf auf vielfältige Weise eingerichtet werden. So kann das Bewegungsmittel 5 mit einem Bewegungsantrieb, im Beispiel mit gesteuertem pneumatischem Antrieb versehen sein, der die Bewegung in zum Beispiel fest vorgebbaren bzw. einstellbaren Zeitintervallen steuert. Besonders zweckmäßig und vorteilhaft ist es, die Bewegung zwischen der Messposition I und der Außenposition II nach Maßgabe oder in Abhängigkeit von der Durchtrittsgeschwindigkeit der Tierkörper 9 durch den Mess-Durchgangsraum 3 und/oder nach Maßgabe des räumlichen Abstandes, mit dem zu messende Tierkörper 9 aufeinanderfolgen, zu steuern bzw. einzurichten.

Im Ausführungsbeispiel der Fig. 1 umfasst die Messvorrichtung 11 ein Steuermittel 6, das jeweils die Messschwenkelemente 21, 22 in die Messposition I und nach Abschluss der Messung, noch während des Passierens des gemessenen Geflügelkörpers 90, in die Außenposition II steuert. Eine solche Steuerung kann mit jeder üblichen Pneumatiksteuerung verwirklicht sein, wie sie zum Beispiel in Fig. 2B mit dem Bezugszeichen 522 und zugehörigen Leitungen 523 dargestellt ist. Statt einer Pneumatik-Steuerung kann jede andere übliche geeignete Bewegungssteuerung für den Antrieb und den Bewegungsablauf eingesetzt werden. Insbesondere kann eine nicht dargestellte Kurvensteuerung mit Elementen des Förderers der Bearbeitungsvorrichtung 7 zum Bewegungsantrieb verbunden sein.

Das Steuermittel 6 kann auch durch einen Steuerungsteil der Steuereinrichtung 8 gebildet sein, wie dies in Fig. 1 mit Steuerverbindung S dargestellt ist.

Im Ausführungsbeispiel gemäß Fig. 1 ist es von besonderem Vorteil, dass die Messungen an Geflügelkörpern 90 durchgeführt werden können, die in auch sehr kleinem räumlichem Abstand aufeinanderfolgen. Dies gelingt dadurch, dass die Messschwenkelemente 21, 22 jeweils nach Abschluss des Messvorgangs, z. B. nach einer Mess- und gegebenenfalls Folgeauslenkung von zum Beispiel ca. 25°, schlagartig aus dem Mess-Durchgangsraum in die in Fig. 3A dargestellte V-förmige Position steuerbar sind. Mit der Aufsteuerung in die Außenposition II erreicht man zugleich eine messtechnische Ausgangs- oder Normalposition III. Diese Position ist dadurch definiert, dass wenigstens ein Messgeber 2 bzw. die Messschwenkelemente 21, 22 nicht nur in ihre Außenposition gelangen, in der der Mess-Durchgang für den gemessenen/zu messenden Tierkörper 9 freigegeben ist, sondern auch in eine definierte Position zum Starten der nächsten Messung. Diese Position wird in Fig. 3A und Fig. 4B eingenommen. Sie ist insoweit unabhängig von der Schwenkposition der Messschwenkelemente 21, 22 um die Aufsteuer-Schwenkachsen 50, solange sich die Messschwenkelemente 21, 22 nicht in Berührungs- bzw. aktivem Messkontakt mit dem Tierkörper 9 befinden. Es kommt im Ausführungsbeispiel darauf an, dass jeweils die Messauslenkung um die Messschwenkachse 40 zurückgestellt ist. Das Rückstellen der Schwenkauslenkung kann zum Beispiel durch eine Rückstellkraft erzeugende Rückstelleinrichtung 33 durchgeführt werden, die beim Auslenken oder an einem Punkt der Auslenkung eine Rückstellkraft erzeugt, die das Messschwenkelement 21, 22 wieder in die Normal- oder Nullstellung setzt.

Ein Beispiel einer Anordnung mit Rückstelleinrichtung 33 ist in Fig. 2A, 2B dargestellt. Jeweils ist das Halteelement 42 mit einem axialen Element 34 drehfest verbunden, das seinerseits drehfest mit einem Armelement 333 verbunden ist. Eine Zugfeder 331 hält das Armelement 333 in der Außen- und Normalposition II, III gegen einen stationären, gestellfesten Anschlag 332. Zum Beispiel kann der Messausschlag W über das axiale Element 34 mittels eines Wandlers 35, zum Beispiel in Form eines Winkelkodierers, in ein das Messmittel 32 beaufschlagendes Signal umgesetzt werden.

Der genannte relativ kleine Abstand zwischen zwei aufeinanderfolgenden Tierkörpern 9 wird im Ausführungsbeispiel der Bearbeitungsvorrichtung 7 dadurch erreicht, dass die Haltevorrichtungen 77 an dem Förderer mit entsprechend geringen, gleichen Abständen angeordnet sind. Dadurch erreicht man eine wesentliche Steigerung des Durchsatzes. Bei insbesondere konstanter Fördergeschwindigkeit kann dann die Taktung des Steuermittels 6 nach Maßgabe des gewählten geringen Abstands zwischen den Haltevorrichtungen 77 eingestellt bzw. eingerichtet werden.

Die erste Messvorrichtung 11, die die Körpergelenke 96 detektiert, steuert zum Beispiel mittels der Steuereinrichtung 8 die Schabewerkzeuge der Schabevorrichtung 731, um diese nach Maßgabe der individuellen Abstände der Körpergelenke 96 zu beabstanden.

Die zweite Messvorrichtung 12 umfasst, wie in Fig. 1 dargestellt, zwei Messgeber 2, nämlich Messschwenkelemente 24, 25, die, in Symmetrieanordnung, durch Flügelklappen eines türartigen Messdurchgangs gebildet sind. Mess-Schwenkachsen 40 sind zumindest im Wesentlichen senkrecht zu einer Mess-Durchgangsebene 30 gerichtet, die einer parallel mit den Sockelplatten 771 der Stützkörper 772 liegenden Förderebene entspricht. Zum Messen, das heißt beim Durchgang des Tierkörpers 9, werden die Klappen zum Erfassen einer insbesondere maximalen Querabmessung jedes Tierkörpers 9 um die Messschwenkachsen 40 aufgeschwenkt. Um die Klappen nach dem Durchführen einer solchen Dickenmessung gezielt und insbesondere noch vor dem vollständigen Durchgang des Tierkörpers 9 in ihre Ausgangs- bzw. Normalposition zum Messen zu bringen, umfasst ein Haltemittel 4, das das Klappenpaar schwenkbeweglich lagert, ein in Fig. 1 nicht dargestelltes Bewegungsmittel, nämlich eine Schwenkeinrichtung, mit der die Klappen jeweils durch Schwenken um eine Aufsteuer-Schwenkachse 50 vollständig aus dem Mess-Durchgangsraum bzw. dem Förder-Durchgangsraum herausschwenkbar sind, nämlich in eine Außenposition, wie sie zuvor im Zusammenhang mit der Beschreibung der Messvorrichtung 11 definiert worden ist. Man erkennt, dass die Messgeber 2 der Messvorrichtung 12 in Bezug auf die Durchgangsebene 30 bzw. die Förderebene nach oben oder auch nach unten geschwenkt werden, während demgegenüber die Messschwenkelemente 21, 22 der Messvorrichtung 11 zur Seite des Mess-Durchgangsweges 31 aufschwenkbar angeordnet sind. Die Aufsteuer-Schwenkachsen 50 der Messvorrichtung 12 sind zum Beispiel parallel zur Mess-Durchgangsebene 30 und senkrecht zu den Klappenflächen angeordnet. Die Messvorrichtung 12 ist gleichfalls wie die Messvorrichtung 11 mit einem Steuermittel 6 ausgestattet.

## Patentansprüche

1. Tierkörper-Messvorrichtung (1), eingerichtet zum individuellen Erfassen von Merkmalen von in Reihe beabstandet und längs eines Weges förderbaren geschlachteten Tierkörpern (9), umfassend wenigstens einen Messgeber (2), eingerichtet zum Messen wenigstens eines Merkmals der Tierkörper (9), einen Mess-Durchgangsraum (3) zum Durchfördern der Tierkörper (9) längs eines Mess-Durchgangswegs (31), an dem wenigstens ein genannter Messgeber (2) zum Messen während des Förderns angeordnet ist, sowie ein Haltemittel (4), das den genannten Messgeber (2) in innerhalb des Mess-Durchgangsraums (3) liegender Position hält, wobei das Haltemittel (4) ein Bewegungsmittel (5) umfasst, mit dem der genannte Messgeber (2) durch Hinundherbewegen verstellbar ist zwischen innerhalb des Mess-Durchgangsraums (3) liegender Messposition (I) und einer freien Durchgang der Tierkörper (9) zulassenden Außenposition (II), die als solche vollständig außerhalb des Mess-Durchgangsraums (3) liegt, **dadurch gekennzeichnet, dass** wenigstens ein genannter Messgeber (2) derart ausgebildet ist, dass er in seiner Messposition schwenkbeweglich an dem zu messenden Tierkörper (9) zur Anlage gelangt, wobei er einen Messwert nach Maßgabe von Mess-Schwenkauslenkung aus einer definierten Normalposition heraus verursacht und in der Außenposition (II) in die Normalposition (III) gelangt, wobei die Außenposition (II) die definierte Normalposition (III) des Messgebers (2) zwischen zwei aufeinanderfolgenden Messungen umfasst.

2. Messvorrichtung nach Anspruch 1, **dadurch gekennzeichnet, dass** das genannte Bewegungsmittel (5) eine Schwenkeinrichtung (51) zum Steuern der Verstellbewegung des genannten Messgebers (2) durch Hinundherschwenken zwischen Messposition (I) und Außenposition (II) umfasst.

3. Messvorrichtung nach Anspruch 2, **dadurch gekennzeichnet, dass** der Messgeber (2) um eine sich in Richtung des Durchgangswegs (31) erstreckende Schwenkachse (50) der Schwenkeinrichtung (51) schwenkbar ist.

4. Messvorrichtung nach Anspruch 2 oder 3, **dadurch gekennzeichnet, dass** die Schwenkeinrichtung (51) ein durch Steuerung längenveränderbares Element (52) umfasst, durch das der Messgeber (2) und ein vorrichtungsstationäres Lagerelement (43) verbunden sind.

5. Messvorrichtung nach Anspruch 4, **dadurch gekennzeichnet, dass** das längenveränderbare Element (52) ein Pneumatikzylinder (521) ist.

6. Messvorrichtung nach Anspruch 4 oder 5, **dadurch gekennzeichnet, dass** das vorrichtungsstationäre Lagerelement (43) an dem freien Ende eines vorrichtungsstationären Halteelements (42) angeordnet ist.

7. Messvorrichtung nach Anspruch 6, **dadurch gekennzeichnet, dass** das Halteelement (42) zum Durchführen einer Messung an dem Tierkörper (9) um eine quer zum Mess-Durchgangsweg (31) gerichtete Messschwenkachse (40) schwenkbar ist.

8. Messvorrichtung nach einem der Ansprüche 1 bis 7, **dadurch gekennzeichnet, dass** das Bewegungsmittel (5) eine Kurvenführung zum Steuern der Verstellbewegung des genannten Messgebers (2) zwischen Messposition (I) und Außenposition (II) umfasst.

9. Messvorrichtung nach einem der Ansprüche 1 bis 8, **dadurch gekennzeichnet, dass** der genannte Messgeber (2) so eingerichtet und an dem Durchgangsweg (31) angeordnet ist, dass er in der Messposition (I) in Berührungskontakt mit zu messendem Tierkörper (9) gelangt.

10. Messvorrichtung nach einem der Ansprüche 1 bis 9, **dadurch gekennzeichnet, dass** das Bewegungsmittel (5) ein eine zeitliche Abfolge bewirkendes Steuermittel (6) umfasst, das derart eingerichtet ist, dass es den Messgeber (2) zunächst in seine Messposition (I) und nach Abschluss der Messung noch während des Passierens des gemessenen Tierkörpers (9) in seine Außenposition (II) steuert.

11. Bearbeitungsvorrichtung (7) zum Entfernen des Fleisches von geschlachteten Tierkörpern (9), insbesondere von ausgenommenen Körpern (90) extremitätenlosen Geflügels, umfassend in einer Bearbeitungslinie (70) angeordnete Bearbeitungsstationen (73, 74), einen angetriebenen Förderer (76) mit längs der Bearbeitungslinie (70) in Reihe angeordneten Haltevorrichtungen (77) zum Transport von dort gestützten Tierkörpern (9) und Vorbeiführen derselben an den Bearbeitungsstationen (73, 74), wenigstens eine Messsignale abgebende Messvorrichtung (1) zum Erfassen individueller Merkmale der Tierkörper (9) während ihrer Förderung sowie eine die Messsignale empfangende Steuereinrichtung (8) zum Steuern des Betriebs der Bearbeitungsstationen (73, 74), **dadurch gekennzeichnet, dass** die genannte Messvorrichtung durch eine Messvorrichtung (1) nach einem der Ansprüche 1 bis 10 gebildet ist.

12. Vorrichtung nach Anspruch 11, **dadurch gekennzeichnet, dass** eine genannte Messvorrichtung (1) zum Erfassen der Position wenigstens einer in der Bearbeitungslinie (70) vorausgerichteten Körperstelle der geförderten Tierkörper (9) eingerichtet und angeordnet ist, wobei der Messgeber (2) wenigstens ein in seiner Messposition (I) an die Körperstelle zur Anlage bringbares Messschwenkelement (21, 22) umfasst, das in der Messposition (I) zum Messen aufschwenkt und in der Außenposition (II) in seine Normalposition (III) zurückschwenkt.

13. Vorrichtung nach Anspruch 11 oder 12, **dadurch gekennzeichnet, dass** eine genannte Messvorrichtung (1) wenigstens einen genannten Messgeber (2) umfasst, der durch ein in seiner Messposition an den Tierkörper (9) zur Anlage bringbares Messschwenkelement (24, 25) gebildet ist, das um eine sich quer zur Richtung des Durchgangswegs (31) erstreckende Schwenkachse (50) zum Hin- und Herbewegen zwischen Messposition (I) und Außenposition (II) schwenkbar ist.

14. Vorrichtung nach einem der Ansprüche 11 bis 13, **dadurch gekennzeichnet, dass** das Bewegungsmittel (5) der genannten Messeinrichtung (1) ein Steuermittel (6) umfasst, mit dem die Zeit, in der sich der Messgeber (2) in seiner Außenposition (II) befindet, nach Maßgabe eines gewünschten zeitlichen Abstands zwischen zwei bei Förderung aufeinanderfolgenden Haltevorrichtungen (77) eingestellt ist.

15. Vorrichtung nach Anspruch 14, **dadurch gekennzeichnet, dass** aufeinanderfolgende Haltevorrichtungen (77) in gleichem räumlichem Abstand angeordnet sind, mit dem bei konstanter Fördergeschwindigkeit der Haltevorrichtungen (77) der zeitliche Abstand vorgegeben ist, in dem sich der genannte Messgeber (2) in seiner Außenposition (II) befindet.

## Claims

1. An animal body measuring apparatus (1) designed to individually detect features of slaughtered animal bodies (9) that are conveyable in a row at a distance from each other and along a path, said measuring apparatus comprising at least one sensor (2) designed to measure at least one feature of the animal body (9), a measurement passage space (3) for conveying the animal bodies (9) through along the measurement passage path (31), on which at least one said sensor (2) is arranged for measurement during conveyance, and a holding means (4), which holds said sensor (2) in a position lying within the measurement passage space (3), wherein the holding means (4) comprises a movement means (5), by means of which said sensor (2), by moving the sensor back and forth, is displaceable between a measurement position (I) lying within the measurement passage space (3) and an outer position (II) permitting free passage of the animal bodies (9), the outer position as such lying completely outside the measurement passage space (3), **characterised in that** at least one said sensor (2) is designed such that it is pivotable in its measurement position, coming to rest on the animal body (9) to be measured, wherein it produces a measurement value according to the measurement pivot deflection from a defined normal position and in the outer position (II) achieves the normal position (III), wherein the outer position (II) comprises the defined normal position (III) of the sensor (2) between two sequential measurements.

2. Measuring apparatus according to claim 1, **characterised in that** said movement means (5) comprises a pivot mechanism (51) for controlling the displacement of said sensor (2) by pivoting back and forth between measurement position (I) and an outer position (II).

3. Measuring apparatus according to claim 2, **characterised in that** the sensor (2) can pivot on a pivot axis (50) of the pivot mechanism (51) which extends in the direction of the passage path (31).

4. Measurement apparatus according to claim 2 or 3, **characterised in that** the pivot mechanism (51) comprises an element (52), the length of which is adjustable by control, by means of which the sensor (2) and a bearing element (43) stationary in the apparatus are connected.

5. Measuring apparatus according to claim 4, **characterised in that** the length-adjustable element (52) is a pneumatic cylinder (521).

6. Measurement apparatus according to claim 4 or 5, **characterised in that** the bearing element (43) stationary in the apparatus is arranged on the free end of a holding element (42) stationary in the apparatus.

7. Measuring apparatus according to claim 6, **characterised in that** the holding element (42) for performing a measurement of the animal body (9) can pivot on a measurement pivot axis (40) oriented transversely to the measurement passage path (31).

8. Measuring apparatus according to any one of claims 1 to 7, **characterised in that** the movement means (5) comprises a cam for controlling the displacement of said sensor (2) between measurement position (I) and outer position (II).

9. Measuring apparatus according to any one of claims 1 to 8, **characterised in that** said sensor (2) is designed and arranged on the passage path (31) such that in the measurement position (I) it touches the animal body (9) to be measured.

10. Measurement apparatus according to any one of claims 1 to 9, **characterised in that** the movement means (5) comprises a control means (6) which effects a time sequence, said control means being designed such that it controls the sensor (2) first in its measurement position (I) and after completion of the measurement in its outer position (II) still during the passage of the measured animal body (9).

11. Processing apparatus (7) for removing the meat from slaughtered animal bodies (9), in particular from gutted bodies (90) of poultry without extremities, comprising processing stations (73, 74) arranged in a processing line (70), a driven conveyor (76) with holding apparatuses (77) arranged in a row along the processing line (70) to transport animal bodies (9) supported there and to let these pass the processing stations (73, 74), at least one measuring apparatus (1) emitting measurement signals for recording individual body features of the animal bodies (9) during their conveyance, and a control device (8), which receives the measurement signals, for controlling the processing stations (73, 74), **characterised in that** the said measuring apparatus is constituted by a measuring apparatus (1) according to any one of claims 1 to 10.

12. Apparatus according to claim 11, **characterised in that** said measuring apparatus (1) is designed and arranged for recording the position of at least one pre-aligned body point of the conveyed animal bodies (9) in the processing line (70), wherein the sensor (2) comprises at least one pivot element (21, 22) for measurement which is adapted to rest in its measurement position (I) on the body point, said element pivoting up for measurement in its measurement position (I) and pivoting back in the outer position (II) to its normal position (III) .

13. Apparatus according to claim 11 or 12, **characterised in that** a said measuring apparatus (1) comprises at least one said sensor (2), which is constituted by a pivot element (24, 25) for measurement which is adapted to rest in its measurement position on the animal body (9), said pivot element being able to be pivoted back and forth between the measurement position (I) and the outer position (II) on a pivot axis (50) extending transversely to the direction of the passage path (31).

14. Apparatus according to any one of claims 11 to 13, **characterised in that** the movement means (5) of said measuring apparatus (1) comprises a control means (6) with which the time in which the sensor (2) is in its outer position (II) is set according to a desired time interval between two sequential holding apparatuses (77) during conveyance.

15. Apparatus according to claim 14, **characterised in that** sequential holding apparatuses (77) are arranged with the same spatial distance with which at constant conveying speed of the holding apparatuses (77) the time interval is specified in which said sensor (2) is in its outer position (II).

## Revendications

1. Dispositif de mesure de carcasses (1), conçu pour recueillir de manière individuelle des caractéristiques de carcasses d'animaux abattus (9) susceptibles d'être convoyées espacées par rangée et le long d'une voie, comprenant au moins un détecteur (2) conçu pour mesurer au moins une caractéristique des carcasses (9), un espace de passage de mesure (3) pour faire passer les carcasses (9) le long d'une piste de voie de mesure (31), sur laquelle au moins un détecteur (2) nommé est agencé pour effectuer la mesure pendant le convoyage, ainsi qu'un moyen de maintien (4) qui maintient ledit détecteur (2) en position allongée dans l'espace de passage de mesure (3), le moyen de maintien (4) comprenant un moyen de mise en mouvement (5) avec lequel ledit détecteur (2) est, par mouvements de va-et-vient, susceptible d'être transféré de la position de mesure (I) allongée dans l'espace de passage de mesure (3) à une position extérieure (II) laissant passer les carcasses (9), cette position extérieure (II) étant en tant que telle entièrement en dehors de l'espace de passage de mesure (3), **caractérisé en ce qu**'au moins un détecteur (2) nommé est constitué de telle sorte qu'il se met par pivotement au contact de la carcasse (9) à mesurer dans sa position de mesure, provoquant une grandeur de mesure en fonction d'un mouvement de pivotement de mesure à partir d'une position normale définie et passant en position normale (III) quand il est dans la position extérieure (II), la position extérieure (II) comprenant la position normale (III) définie du détecteur (2) entre deux mesures consécutives.

2. Dispositif de mesure selon la revendication 1, **caractérisé e**n **c**e **que** ledit moyen de mise en mouvement (5) comprend un dispositif de pivotement (51) destiné à commander le mouvement de transfert dudit détecteur (2) par pivotements de va-et-vient entre la position de mesure (I) et la position extérieure (II).

3. Dispositif de mesure selon la revendication 2, **caractérisé en ce que** le détecteur (2) est susceptible de pivoter autour d'un axe de pivotement (50) du dispositif de pivotement (51), lequel axe (50) s'étend dans le sens de la voie de passage (31).

4. Dispositif de mesure selon la revendication 2 ou 3, **caractérisé e**n **ce que** le dispositif de pivotement (51) comprend un élément (52) susceptible d'être modifié dans sa longueur par commande, par lequel le détecteur (2) et un élément d'appui (43) fixe sur le dispositif sont reliés l'un à l'autre.

5. Dispositif de mesure selon la revendication 4, **caractérisé en ce que** l'élément (52) susceptible d'être modifié en longueur est un vérin pneumatique (521).

6. Dispositif de mesure selon la revendication 4 ou 5, **caractérisé e**n **c**e **que** l'élément d'appui (43) fixe sur le dispositif est agencé sur l'extrémité libre d'un élément de maintien (42) fixe sur le dispositif.

7. Dispositif de mesure selon la revendication 6, **caractérisé en ce que** l'élément de maintien (42) est susceptible de pivoter autour d'un axe de pivotement de mesure (40) orienté à la transversale de la voie de passage de mesure (31) pour réaliser une mesure sur la carcasse (9).

8. Dispositif de mesure selon l'une quelconque des revendications 1 à 7, **caractérisé en ce que** le moyen de mise en mouvement (5) comprend un guidage curviligne destiné à commander le mouvement de transfert dudit détecteur (2) entre la position de mesure (I) et la position extérieure (II).

9. Dispositif de mesure selon l'une quelconque des revendications 1 à 8, **caractérisé e**n **ce que** ledit détecteur (2) est conçu et agencé à la voie de passage (31) de telle manière qu'il se met au contact de la carcasse (9) à mesurer quand il est dans la position de mesure (I).

10. Dispositif de mesure selon l'une quelconque des revendications 1 à 9, **caractérisé en ce que** le moyen de mise en mouvement (5) comprend un moyen de commande (6) suscitant une suite temporelle et conçu de telle sorte qu'il commande le détecteur (2) d'abord dans sa position de mesure (I) et, une fois la mesure finie, dans sa position extérieure (II) alors qu'il est encore en train de longer la carcasse (9) mesurée.

11. Dispositif de traitement (7) pour retirer la viande des carcasses d'animaux (9) abattus, notamment de carcasses évidées (90) de volaille sans extrémité, comprenant des stations de traitement (73, 74) agencées dans une ligne de traitement (70), un convoyeur (76) entraîné muni de dispositifs de maintien (77) agencés en rangée le long de la ligne de traitement (70) et destinés au transport de carcasses (9) en appui dessus et au guidage de celles-ci le long des stations de traitement (73, 74), au moins un dispositif de mesure (1) émettant des signaux de mesure pour détecter des caractéristiques individuelles des carcasses (9) pendant leur convoyage ainsi qu'un dispositif de commande (8) recevant les signaux de mesure pour commander la marche des stations de traitement (73, 74), **caractérisé en ce que** ledit dispositif de mesure est formé par un dispositif de mesure (1) selon l'une quelconque des revendications 1 à 10.

12. Dispositif selon la revendication 11, **caractérisé en ce qu**'un dispositif de mesure (1) nommé est conçu et agencé pour détecter la position d'au moins un point de la carcasse, dirigé vers l'avant dans la ligne de traitement (70), des carcasses (9) convoyées, le détecteur (2) comprenant au moins un élément de pivotement de mesure (21, 22) susceptible d'être amené, dans sa position de mesure (I), au contact du point de la carcasse, lequel élément de pivotement de mesure pivote dans la position de mesure (I) pour effectuer la mesure et retourne en pivotant dans la position extérieure (II) pour atteindre sa position normale (III).

13. Dispositif selon la revendication 11 ou 12, **caractérisé en ce qu**'un dispositif de mesure (1) nommé comprend au moins un détecteur (2) nommé qui est formé par un élément de pivotement de mesure (24, 25) susceptible d'être mis au contact, dans sa position de mesure, de la carcasse (9), lequel élément de pivotement de mesure est susceptible de pivoter autour d'un axe de pivotement (50) s'étendant à la transversale du sens de la voie de passage (31) pour passer par mouvements de va-et-vient entre la position de mesure (I) et la position extérieure (II).

14. Dispositif selon l'une quelconque des revendications 11 à 13, **caractérisé en ce que** le moyen de mise en mouvement (5) dudit dispositif de mesure (1) comprend un moyen de commande (6) avec lequel le temps pendant lequel le détecteur (2) se trouve dans sa position extérieure (II) est réglé en fonction d'un espace temporel souhaité entre deux dispositifs de maintien (77) consécutifs lors du convoyage.

15. Dispositif selon la revendication 14, **caractérisé en ce que** des dispositifs de maintien (77) consécutifs sont agencés à la même distance physique à laquelle, à vitesse de convoyage constante des dispositifs de maintien (77), est prévu l'espacement temporel dans lequel ledit détecteur (2) se trouve dans sa position extérieure (II).
